# EUROPÄISCHE PATENTSCHRIFT

(11) **EP 2 979 352 B1**
(45) Veröffentlichungstag und Bekanntmachung des Hinweises auf die Patenterteilung: **26.05.2021**
(21) Anmeldenummer: 14706478.6
(22) Anmeldetag: 14.02.2014
(51) Int. Cl.: H02M 3/00, H02J 1/00, B65G 1/02, H02P 3/00

(54) **VORRICHTUNG, INSBESONDERE MASCHINE ODER ANLAGE, UND VERFAHREN ZUM BETREIBEN EINER VORRICHTUNG**
DEVICE, IN PARTICULAR MACHINE OR PLANT, AND METHOD FOR OPERATING A DEVICE
DISPOSITIF, EN PARTICULIER MACHINE OU INSTALLATION, ET PROCÉDÉ PERMETTANT DE FAIRE FONCTIONNER UN DISPOSITIF

(30) Priorität: 27.03.2013 DE 102013005240; 23.04.2013 DE 102013006964
(43) Veröffentlichungstag der Anmeldung: 03.02.2016
(73) Patentinhaber: SEW-EURODRIVE GmbH & Co. KG, 76646 Bruchsal (DE)
(72) Erfinder: HAUCK, Matthias, 68723 Schwetzingen (DE); ZÖLLER, Thomas, 76646 Bruchsal (DE); SCHÖNUNG, Frank, 76676 Graben-Neudorf (DE); SCHMIDT, Josef, 76676 Graben-Neudorf (DE)
(86) Internationale Anmeldenummer: PCT/EP2014/000402
(87) Internationale Veröffentlichungsnummer: WO 2014/154317

(56) Entgegenhaltungen:
- EP-A1- 2 062 836
- DE-A1-102012 011 914
- DE-C1- 19 546 421
- JP-A- 2010 180 003
- US-A1- 2002 093 310
- US-A1- 2007 137 945
- SAHA S ET AL: "Regenerative braking in a low power lift drive system", POWER ELECTRONIC DRIVES AND ENERGY SYSTEMS FOR INDUSTRIAL GROWTH, 1998 . PROCEEDINGS. 1998 INTERNATIONAL CONFERENCE ON PERTH, WESTERN AUSTRALIA 1-3 DEC. 1998, PISCATAWAY, NJ, USA,IEEE, Bd. 2, 1. Dezember 1998 (1998-12-01), Seiten 827-832, XP010720629, ISBN: 978-0-7803-4879-0

## Beschreibung

Die Erfindung betrifft eine Vorrichtung, insbesondere Maschine oder Anlage, und ein Verfahren zum Betreiben einer Vorrichtung.

Es ist allgemein bekannt, dass Wechselrichter die im generatorischen Betrieb von einem Elektromotor erzeugte Energie rückspeisen in den sie ansonsten speisenden unipolaren Zwischenkreis.

Aus der http://de.wikipedia.org/wiki/Schuko ist ein Schukosteckverbinderteil bekannt.

Aus der JP 2010 180003 A ist ein Versorgungssystem für einen Aufzug bekannt.

Aus der Veröffentlichung SAHA S ET AL: "Regenerative braking in a low power lift drive system" POWER ELECTRONIC DRIVES AND ENERGY SYSTEMS FOR INDUSTRIAL GROWTH, 1998, PROCEEDINGS, 1998 INTERNATIONAL CONFERENCE ON PERTH; WESTERN AUSTRALIA, 1-3 DEC. 1998, PISCATAWAY, NJ, USA, IEEE, Bd. 2, 1. December 1998, Seiten 827 - 832, XP010720629, ISBN: 978-0-7803-4879-0 ist ein regeneratives Bremssystem bei einem Lift bekannt.

Aus der EP 2 062 836 A1 ist ein Verfahren zum Auslagern bekannt.

Aus der US 2007/137945 A1 ist eine Aufzugssteuerung bekannt.

Aus der DE 10 2012 011914 A1 ist eine Motoransteuerungsvorrichtung bekannt.

Aus der US 2002/093310 A1 ist als nächstliegender Stand der Technik eine kontaktlos versorgte Spannungsversorgungseinheit bei einem Mobilteil bekannt.

Aus der DE 195 46 421 C1 ist eine Batterieankoppelvorrichtung bekannt.

Der Erfindung liegt daher die Aufgabe zugrunde, einen Zwischenkreis mit einem Energiespeicher in einfacher Weise weiterzubilden.

Erfindungsgemäß wird die Aufgabe bei der Vorrichtung nach den in Anspruch 1 und bei dem Verfahren nach den in Anspruch 12 angegebenen Merkmalen gelöst.

Von Vorteil ist dabei, dass mittels des DC/DC-Wandlers die den Energiespeicher und den oder die Wechselrichter versorgende Spannung unabhängig von dem Wert der den DC/DC-Wandler versorgenden Spannung ist.

Bei einer vorteilhaften Ausgestaltung ist der DC/DC-Wandler aus einem Gleichrichter versorgbar, welcher aus einer netzseitigen Spannungsquelle versorgbar ist, insbesondere wobei die Spannungsquelle eine einphasige Wechselspannungsquelle ist,
insbesondere wobei der Gleichrichter über eine Steckverbindung aus einer Spannungsquelle versorgbar ist, wobei die Steckverbindung ein Schuko-Steckverbinderteil aufweist und/oder die Spannungsquelle zwischen 100 Volt und 300 Volt und zwischen 45 Hertz und 65 Hertz aufweist, insbesondere 230 Volt und 50 Hertz aufweist. Von Vorteil ist dabei, dass eine einphasige Versorgung und somit eine Versorgung mit sehr geringer maximaler Leistung, insbesondere mit weniger als 3 kW, ermöglicht ist, obwohl die Motoren als Drehstrommotoren mit einer maximal aufnehmbaren Leistung ausgeführt sind, die viel größer ist als die maximal über den DC/DC-Wandler zuführbare Leistung. Insbesondere ist dieser Verbrauchswert eine Größenordnung größer als der maximale Verbrauchswert der Antriebe. Beispielsweise leisten die Antriebe 30 kW Spitzenleistung oder mehr.

Bei einer vorteilhaften Ausgestaltung ist der Gleichrichter aus der netzseitigen Spannungsquelle mittels einer Schleifleitung, insbesondere also mittels eines Schleifkontakts, oder mittels Schleppleitung versorgbar,
oder wobei der Gleichrichter aus einer Sekundärwicklung versorgbar ist, welche zu einem in der Vorrichtung stationär vorgesehenem Primärleiter induktiv gekoppelt angeordnet ist. Von Vorteil ist dabei, dass niedrige Versorgungsleistungen ausführbar sind und trotzdem hohe Spitzenleistung der Antriebe erreichbar ist.

Bei einer vorteilhaften Ausgestaltung speist der jeweilige Wechselrichter einen Elektromotor, insbesondere Drehstrommotor, insbesondere so dass im generatorischen Betrieb mechanische Energie in elektrische Energie wandelbar ist. Von Vorteil ist dabei, dass die generatorisch erzeugte Energie entweder sofort in einem motorisch arbeitenden Antrieb verbraucht wird oder im Energiespeicher gespeichert wird.

Bei einer vorteilhaften Ausgestaltung ist in der Vorrichtung kein Bremswiderstand vorgesehen und die generatorisch erzeugte überschüssige Energie nicht in die netzseitige Spannungsquelle rückgespeist wird sondern dem Energiespeicher zuführbar ist und dort speicherbar ist. Von Vorteil ist dabei, dass ein Bremswiderstand einsparbar ist.

Bei einer vorteilhaften Ausgestaltung fungiert der DC/DC-Wandler als Stellglied für die von der netzseitigen Spannungsquelle der Vorrichtung zugeführte Leistung. Von Vorteil ist dabei, dass die dem Zwischenkreis zugeführte Leistung regelbar ist auf einen vorgebbaren Sollwert hin.

Bei einer vorteilhaften Ausgestaltung ist der DC/DC-Wandler derart ausgeführt und eingerichtet, dass stets oder zumindest zeitweise die gleichgerichtete netzseitige Spannung kleiner ist als die an der Ausgangsseite auftretende Spannung oder dieser gleicht. Von Vorteil ist dabei, dass mit einer kleinen Versorgungsspannung trotzdem eine hohe Zwischenkreisspannung aufrecht erhaltbar ist.

Bei einer vorteilhaften Ausgestaltung weist der DC/DC-Wandler eine Induktivität auf, welche mit einem ersten steuerbaren Schalter in Reihe geschaltet ist, wobei der Ausgangsstrom des Gleichrichters dieser Reihenschaltung zugeführt wird,
insbesondere wobei ein weiterer steuerbarer Schalter auf der von dem ersten steuerbaren Schalter abgewandten Seite der Induktivität angeordnet ist,
wobei aus dem ersten steuerbaren Schalter und einer ersten Diode eine erste Reihenschaltung gebildet ist, die von der eingangsseitig den DC/DC-Wandler speisenden Spannung gespeist wird,
wobei aus dem zweiten steuerbaren Schalter und einer zweiten Diode eine zweite Reihenschaltung gebildet ist, wobei an der die ausgangsseitige Spannung des DC/DC-Wandlers vorgesehen ist. Von Vorteil ist dabei, dass mittels des getaktet gesteuerten Stroms durch die Induktivität ein Hochsetzen der ausgangsseitigen Spannung ermöglicht ist. Außerdem ist ein unidirektionaler Leistungsfluss ausführbar.

Bei einer vorteilhaften Ausgestaltung weist der DC/DC-Wandler eingangsseitig und ausgangsseitig jeweils eine Reihenschaltung aus zwei steuerbaren Schaltern auf, wobei die Mittelabgriffe der Reihenschaltungen mittels einer Induktivität verbunden sind. Von Vorteil ist dabei, dass ein Hochsetzen und ein Heruntersetzen der Spannung ermöglicht ist. Außerdem ist ein bidirektionaler Leistungsfluss ausführbar.

Bei einer vorteilhaften Ausgestaltung ist der die Induktivität durchströmende Strom erfassbar und die erfassten Werte werden einer Signalelektronik zugeleitet, welche Ansteuersignale erzeugt, die dem jeweiligen steuerbaren Schalter zugleitet werden,

insbesondere so dass die ausgangsseitig am DC/DC-Wandler erzeugte Ausgangsspannung den eingangsseitig am DC/DC-Wandler anliegenden Spannungswert übersteigt,
wobei die eingangsseitig am DC/DC-Wandler anliegende Spannung von einem Gleichrichter erzeugt ist. Von Vorteil ist dabei, dass eine Regelung der Spannung ermöglicht ist.

Bei einer vorteilhaften Ausgestaltung ist der Energiespeicher derart auf dem bewegbaren Teil einer Maschinenachse angeordnet, dass der bei Bewegung der Maschinenachse entstehende Fahrtwind den Energiespeicher kühlt,
insbesondere wobei das Gehäuse des Energiespeichers in hoher Schutzart ausgeführt ist, insbesondere wasserdicht und luftdicht. Von Vorteil ist dabei, dass eine höhere Leistung ausführbar ist, insbesondere höhere Ladeströme oder Entladeströme.

Bei einem Verfahren zum Betreiben einer vorgenannten Vorrichtung wird die vom DC/DC-Wandler ausgangsseitig, also zum den Energiespeicher und zum den oder die Wechselrichter speisenden Zwischenkreis hin, herausgeführte Leistung derart geregelt oder gesteuert, dass der Ladezustand des Energiespeichers auf einen Ruheladezustand hin geregelt wird.

Von Vorteil ist dabei, dass der Ladezustand des Energiespeichers regelbar ist.

Insbesondere ist der Ruheladezustand ein vorgegebener Wert. Von Vorteil ist dabei, dass ein konstanter Wert vorgebbar ist. Insbesondere ist dieser Wert derart gewählt, dass vom Energiespeicher der in elektrische Energie rückwandelbare Anteil der noch in der Vorrichtung, also die noch im System, vorhandenen mechanischen Energie aufnehmbar ist.

Insbesondere wird der Ruheladezustand abhängig vom Zustand der Vorrichtung bestimmt, insbesondere abhängig von demjenigen Anteil der mechanischen Energie, insbesondere der kinetischen und potentiellen Energie, welcher elektrisch rückwandelbar ist,
insbesondere wobei der Ruheladezustand derart abhängig vom Zustand der Vorrichtung bestimmt wird, dass die Energiedifferenz zwischen dem maximal zulässigen und/oder erreichbaren Ladezustand des Energiespeichers und dem Ruheladezustand demjenigen Anteil der mechanischen Energie, insbesondere der kinetischen und potentiellen Energie, welcher elektrisch rückwandelbar ist, entspricht. Insbesondere ist der Energiespeicher derart groß dimensioniert, dass derjenige Anteil der in der Vorrichtung maximal vorhandenen mechanischen Energie, insbesondere der kinetischen und potentiellen Energie, welcher elektrisch rückwandelbar ist, in den Energiespeicher einspeisbar ist. Von Vorteil ist dabei, dass im Energiespeicher mehr Energie speicherbar, also der Energiespeicher besser ausgenutzt ist unter Beibehaltung einer hohen Sicherheit.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein schematischer Schaltplan der erfindungsgemäßen Vorrichtung schematisch dargestellt, wobei ein DC/DC-Wandler 3 von der Vorrichtung umfasst ist.

In der Figur 2 ist der DC/DC-Wandler 3 näher dargestellt.

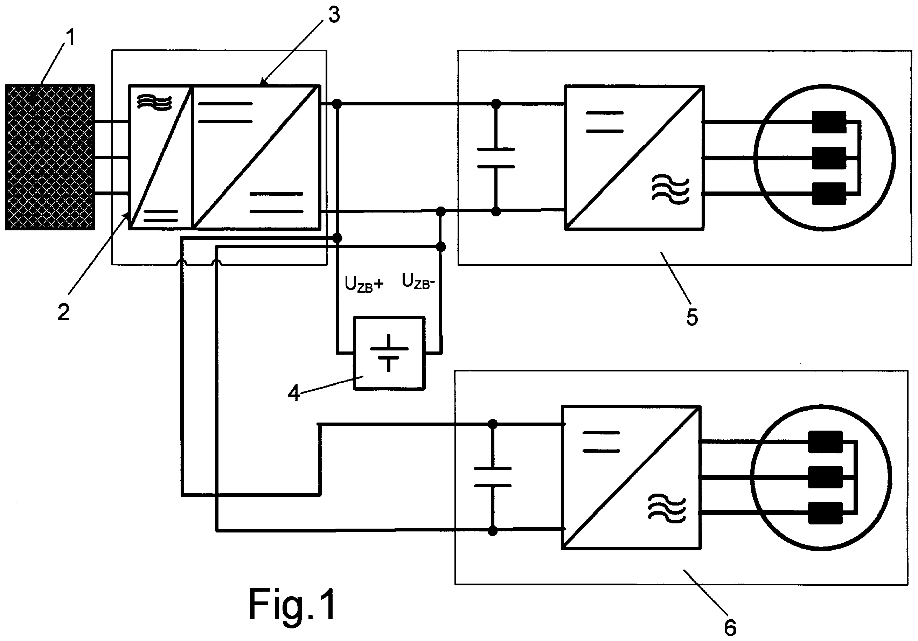

Wie in Figur 1 gezeigt, versorgt eine dreiphasige oder einphasige Wechselspannungsquelle 1 einen Gleichrichter 2, aus dem ein DC/DC-Wandler 3 gespeist wird, der ausgangsseitig eine unipolare Zwischenkreisspannung zur Verfügung stellt, aus der als Last RL zumindest ein Hubwerkantrieb 5, insbesondere für eine vertikale Bewegung eines zu transportierenden Objekts, und ein Fahrwerksantrieb, insbesondere für eine horizontale Bewegung eines zu transportierenden Objekts, versorgbar sind. Außerdem ist ein Energiespeicher, insbesondere aus Kondensatoren, insbesondere aus Doppelschichtkondensatoren, vorgesehen, an dessen Anschlüssen die Zwischenkreisspannung anliegt.

Jeder der Antriebe weist einen eingangsseitig angeordneten Kondensator auf, der ebenso wie der Energiespeicher zur Zwischenkreiskapazität beiträgt, und aus dem ein pulsweitenmoduliert betriebener Wechselrichter versorgt ist, aus dem ein Elektromotor bei motorischer Betriebsart speisbar ist. Bei generatorischer Betriebsart des jeweiligen Antriebs (5, 6) wird Energie rückgespeist in den Zwischenkreis.

Im Energiespeicher 4 ist die von einem der Antriebe (5, 6) rückgespeiste Energie speicherbar, soweit sie nicht vom jeweils anderen Antrieb (5, 6) direkt genutzt wird.

Somit ist die von der Wechselspannungsquelle 1 aufzubringende maximale Versorgungsleistung und somit auch die zugehörige Auslegung des Anschlusses des Gleichrichters 2 an die Wechselspannungsquelle 1 entsprechend gering auslegbar.

Wenn beispielsweise der Hubwerksantrieb nur zeitabschnittsweise motorisch betrieben wird, ist der Energiespeicher derart groß dimensionierbar, dass er die motorischen Leistungsspitzen abpuffert und somit von der Wechselspannungsquelle 1 an den Gleichrichter 2 nur die Durchschnittsleistung, also die über langen Zeiträume gemittelte Leistung, geliefert werden muss also nur noch die Verluste der Applikation decken muss.

Eine Rückspeisung aus dem Zwischenkreis zur Wechselspannungsquelle 1 hin ist nicht notwendig.

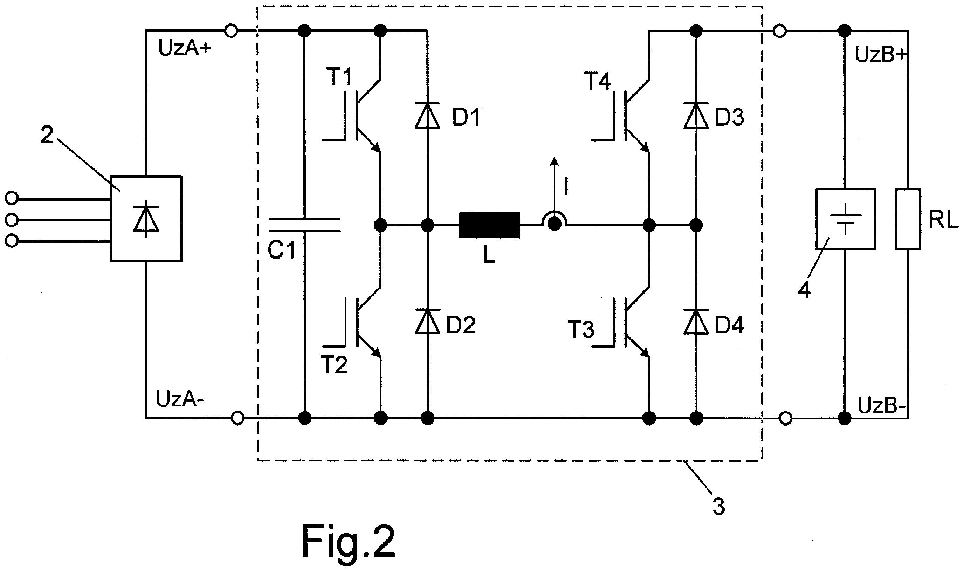

Wie in Figur 2 gezeigt, weist der DC/DC-Wandler 3 einen eingangsseitigen Kondensator C1 auf, wobei diesem eine Reihenschaltung aus zwei steuerbaren Schaltern (T1, T2) und eine Reihenschaltung aus zwei Dioden (D1, D2) parallelgeschaltet ist. Aus den beiden miteinander elektrisch verbundenen Mittelabgriffen der beiden Reihenschaltungen wird eine Induktivität L gespeist, wobei der durch die Induktivität L fließende Strom erfasst wird und wiederum den elektrisch miteinander verbundenen Mittelabgriffen zweier zueinander parallel geschalteten Reihenschaltungen zugeführt wird, wobei die erste Reihenschaltung aus zwei steuerbaren Schaltern (T3, T4) und die zweite Reihenschaltung aus zwei Dioden (D3, D4) besteht.

Mit andere Worten: Der durch die Induktivität L fließende Strom wird erfasst und dem Mittelabgriff einer Reihenschaltung zugeführt, wobei die Reihenschaltung gebildet ist aus einer erste Parallelschaltung und einer Parallelschaltung, wobei die erste Parallelschaltung aus einem steuerbaren Schalter T3 und einer Diode D3 besteht und die zweite Parallelschaltung aus einem steuerbaren Schalter T4 und einer Diode D4 besteht.

Somit ist der Strom I durch die Induktivität L auf einen Sollwert hin regelbar, indem die Schalter T1, T2, T3, T4 entsprechend getaktet, insbesondere pulsweitenmoduliert, angesteuert werden.

Vorzugsweise wird ein unidirektionaler Leistungsfluss vom Gleichrichter 2 über die Induktivität L zur Last hinausgeführt. Auf diese Weise ist sogar der Schalter T2 in ständigem Sperrbetrieb betreibbar und ebenso Schalter T4.Denn eine Rückspeisung von Energie aus dem Zwischenkreis über den Gleichrichter 2 zur Wechselspannungsquelle hin ist nicht notwendig, weil der Energiespeicher 4 die überschüssige in den Zwischenkreis einströmende Leistung aufnimmt.

Sobald der Energiespeicher 4 einen kritischen Ladezustand erreicht hat, wird keine weitere Energie über den DC/DC-Wandler aus dem Gleichrichter 2 und somit aus der Wechselspannungsquelle 1 in den Zwischenkreis zugeführt.

Dabei ist der kritische Ladezustand beispielhaft derart bestimmt, dass die im System noch vorhandene mechanische aber mittels generatorischem Betrieb der Antriebe (5, 6) rückspeisbare Energie, insbesondere kinetische und potentielle Energie, in den Energiespeicher 4 einspeisbar ist. Somit ist der Wert des kritischen Ladezustandes abhängig von dem mechanischen Zustand des Systems.

Alternativ ist der kritische Ladezustand derart niedrig vorgegeben, dass die im System maximal vorhandene mechanische aber mittels generatorischem Betrieb der Antriebe (5, 6) rückspeisbare Energie, insbesondere kinetische und potentielle Energie, in den Energiespeicher 4 einspeisbar ist.

Somit ist weder eine Rückspeisung ins versorgende Wechselspannungsnetz 1 notwendig noch ist ein Bremswiderstand notwendig.

Die elektrische Anschlussleistung am Wechselspannungsquelle 1 hin ist viel niedriger auszulegen als die Spitzenleistung eines der Antriebe. Beispielsweise ist ein 30kW Hubwerksantrieb aus einer einphasigen Schukosteckdose mit 230 Volt, gesichert durch eine 16 Ampere Sicherung, versorgbar, also mit einer Anschlussleistung von weniger als 3 kW. Der Energiespeicher weist eine entsprechend hohe Kapazität auf von beispielsweise 0,1 kWh oder mehr.

Die Wechselrichter der Antriebe (5,6) sind aus demselben Zwischenkreis versorgt.

Vorzugsweise ist das Hubwerk auf dem Fahrwerk angeordnet, so dass der Fahrwerksantrieb das Gewicht des Hubwerksantriebs samt dem Gewicht des zu transportierenden Objekts zu bewegen hat.

Durch die elektrisch parallele Versorgung der Wechselrichter der Antriebe (5, 6) aus dem gemeinsamen Zwischenkreis wird erreicht, dass die generatorisch erzeugte Energie eines der Antriebe (5, 6) durch den anderen Antrieb (5, 6) verbrauchbar ist.

Wegen der großzügigen Dimensionierung des Energiespeichers 4 müssen die Fahrprofile der Antriebe (5, 6) nicht aufeinander abgestimmt werden, obwohl trotzdem die generatorisch von einem der Antriebe (5, 6) erzeugte Energie vom anderen verbrauchbar ist.

Vorzugsweise ist der Energiespeicher 4 aus Doppelschichtkondensatoren aufgebaut.

Der DC/DC-Wandler 3 stoppt die Energiezufuhr an den Zwischenkreis, wenn der Wert des kritischen Ladezustandes im Energiespeicher 4 erreicht ist und aktuell keine Leistungsentnahme aus dem Zwischenkreis durch die Antriebe erfolgt.

Wie in Figur 2 gezeigt, ist der DC/DC-Wandler 3 mittels des getaktet steuerbaren Stroms durch die Induktivität L in der Lage, eine höhere Spannung im Zwischenkreis bereit zu stellen als dem Wert der vom Gleichrichter 2 gleichgerichteten Spannung der Spannungsquelle 1 entspricht. Dabei ist der Gleichrichter 2 vorzugsweise ein Brückengleichrichter für Dreh- oder Wechselstrom und weist somit einen nicht verschwindenden Wert an gleichgerichteter Spannung auf.

Erfindungsgemäß ist also vorteilhaft, dass generatorisch erzeugte Energie unmittelbar an den Antrieben (5, 6) abgespeichert wird und wiederverwendbar ist durch diese.

Außerdem ist die netzseitige Anschlussleistung reduzierbar, da die Spitzenanschlussleistung reduziert ist. Daher sind auch die Installationskosten verringert und die Betriebskosten ebenfalls. Außerdem ist die Anlage in einem weiten Netzspannungsbereich betreibbar.

Ein kurzzeitiger Ausfall der netzseitigen Energieversorgung ist abpufferbar durch den Energiespeicher 4. Somit ist eine Erhöhung der Verfügbarkeit und der Prozesssicherheit in der Anlage erreichbar.

Die Betriebssicherheit ist erhöhbar, da bei einem lang andauernden Ausfall der netzseitigen Energieversorgung die Antriebe in eine vorgegebene Endposition verfahrbar sind, insbesondere in eine für das Hubwerk und das Fahrwerk vorgegebene Endposition. Außerdem ist bei Wiederaufnahme des Produktionsablaufs der Anlage ein definierter Startzustand einhaltbar, indem die vom Energiespeicher bereit gestellte Energie genutzt wird, um bei dem netzseitigen Stromausfall entsprechende Parameter abzuspeichern und/oder entsprechende Endpositionen zu erreichen, so dass dann der gewünschte Startzustand für die Wiederaufnahme des Betriebs nach Beendigung des Stromausfalls hergestellt ist.

Außerdem ist ein gegenseitiges Abstimmen der Fahrprofile der verschiedenen Antriebe nicht notwendig, weil der Energiespeicher genügend Energie bereitstellt, um ein unabhängiges Verfahren der Antriebe (5, 6) zu erlauben. Somit ist auch eine Vereinfachung der Inbetriebnahme und des Betriebsablaufs erreichbar.

Des Weiteren entfällt der Bremswiderstand, da der Energiespeicher generatorisch erzeugte, überschüssige Energie aufnehmbar macht. Daher sind auch entsprechende Kosten, entsprechendes Gewicht und entsprechendes Volumen einsparbar.

Da der Energiespeicher die generatorisch erzeugte, überschüssige Energie aufnehmbar macht, wird diese Energie somit unmittelbar und effizient verwendbar.

Die netzseitige Versorgung des Gleichrichters 2 erfolgt aus der Wechselspannungsquelle 1 vorzugsweise über Schleifleitung oder Schleppleitung. Somit führt die erfindungsgemäße verringerte netzseitige kleiner dimensionierbare Anschlussleistung zu Einsparung und Verringerung des Aufwands für die Schleifleitungsversorgung oder Schleppleitungsversorgung. Alternativ ist aber auch eine induktive Übertragung der netzseitigen Leistung an den Gleichrichter 2 ausführbar, wobei dann die Frequenz der netzseitigen Wechselspannung der Spannungsquelle 1 vorzugsweise in eine höhere Frequenz gewandelt wird und dann über eine transformatorische Kopplung einer Sekundärwicklung zugeführt wird, die den Gleichrichter 2 versorgt.

Vorzugsweise wird der Energiespeicher 4 derart an einer Maschinenachse der Vorrichtung, also an einem beweglichen Teil der Vorrichtung angeordnet, dass bei Betreiben des Antriebs und somit Bewegung des jeweiligen beweglichen Teils eine Kühlung des Energiespeichers 4 mittels des auftretenden Fahrtwindes ausführbar ist. Außerdem ist der Energiespeicher in einer hohen Schutzart ausgeführt, so dass er außerhalb eines ansonsten vorgesehenen Schaltschranks oder dergleichen anordenbar ist.

Da der DC/DC-Wandler 3 die Zwischenkreisspannung steuerbar macht und zwischenkreisseitig eine höhere Spannung zur Verfügung zu stellen vermag als dem Wert an gleichgerichteter Spannung der Spannungsquelle 1 entspricht, ist die Speisespannung der Wechselrichter der Antriebe (5, 6) unabhängig von der von der Spannungsquelle 1 bereit gestellten Spannung.

In einem ersten Ausführungsbeispiel wird dem DC/DC-Wandler 3 von einer übergeordneten Steuerung der zwischenkreisseitig bereit zu stellende Leistungswert übermittelt. Somit wird also die vom DC/DC-Wandler in den Zwischenkreis gespeiste Leistung vorgegeben und auf einen entsprechenden Wert begrenzt. Somit ist die dem Zwischenkreis vom DC/DC-Wandler 3 zugeführte Leistung derart regelbar, dass der Ladezustand des Energiespeichers 4 auf einen vorgegebenen Sollwert, der auch als Ruheladezustand bezeichenbar ist, hin geregelt wird. Die vom DC/DC-Wandler 3 maximal zuführbare Leistung ist dabei ein weiterer begrenzender Wert für die Leistungszufuhr DC/DC-Wandler 3 zum Zwischenkreis. Abhängig von der von den Antrieben (5, 6) aus dem Zwischenkreis entnommenen mittlere Leistung und/oder abhängig vom Ladezustand des Energiespeichers wird vom DC/DC-Wandler 3 Leistung zugeführt.

Vorzugsweise wird der Sollwert derart vorgegeben, dass die von den Antrieben in elektrische Energie wandelbare mechanische Energie vom Energiespeicher in jedem Fall aufnehmbar ist. Wenn also der Fahrantrieb eine hohe kinetische Energie aufweist und der Hubwerksantrieb eine maximal hohe potentielle Energie aufweist, ist der Sollwert derart niedrig vorgegeben, dass der in elektrische Energie wandelbare Anteil der mechanischen Energie vom Energiespeicher noch aufnehmbar ist.

Bei diesem ersten Ausführungsbeispiel ist also der Sollwert ein konstanter fest vorgegebener Wert.

Bei einem zweiten Ausführungsbeispiel wird im Unterschied zum ersten Ausführungsbeispiel der Sollwert abhängig von den Zustandsgrößen der Antriebe, also insbesondere der vorhandenen kinetischen Energie und der vorhandenen potentiellen Energie, bestimmt, so dass die aufnehmbare Energie abhängig vom mechanischen Zustand der Vorrichtung, insbesondere ihrer Antriebe, angepasst wird. Durch diese Betriebsstrategie wird der Energiespeicher besser ausgenutzt und ist somit kleiner dimensionierbar, wodurch entsprechende Einsparungen erreichbar sind.

Bei weiteren erfindungsgemäßen Ausführungsbeispielen sind statt der genannten zwei Antriebe (5,6) weitere Antriebe vorsehbar, wobei alle Antriebe ebenfalls aus dem Zwischenkreis versorgbar sind und bei generatorischem Betrieb in den Zwischenkreis Energie einspeisen können. Mit den Antrieben sind dabei Maschinenachsen betreibbar, so dass jeder Antrieb einem von ihm bewegbar angeordneten Maschinenteil oder Anlagenteil, also Vorrichtungsteil, zugeordnet ist.

Bei weiteren erfindungsgemäßen Ausführungsbeispielen ist die Erfindung auch anwendbar bei Vorrichtungen, die nur einen einzigen oder mehrere Hubwerkantriebe aufweisen und/oder einen einzigen oder mehrere Fahrwerksantriebe aufweisen. Des Weiteren sind zusätzlich auch Hilfsantriebe anschließbar, mit denen weitere Maschinenachsen betreibbar sind.

Bei weiteren erfindungsgemäßen Ausführungsbeispielen ist wegen der geringen Anschlussleistung dem Gleichrichter 2 die netzseitige Wechselspannung der Spannungsquelle 1 über eine haushaltsübliche Schuko-Steckdose und/oder Schuko-Steckverbinderteil ermöglicht.

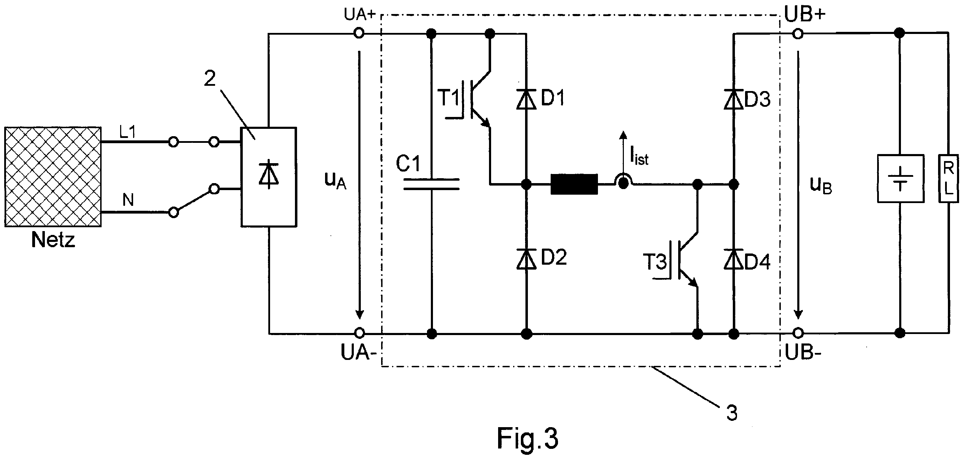

Figur 3 zeigt die überarbeiteten Blockdiagramme des Gesamtsystem bzw. des DC/DC-Wandlers bei einphasiger Einspeisung.

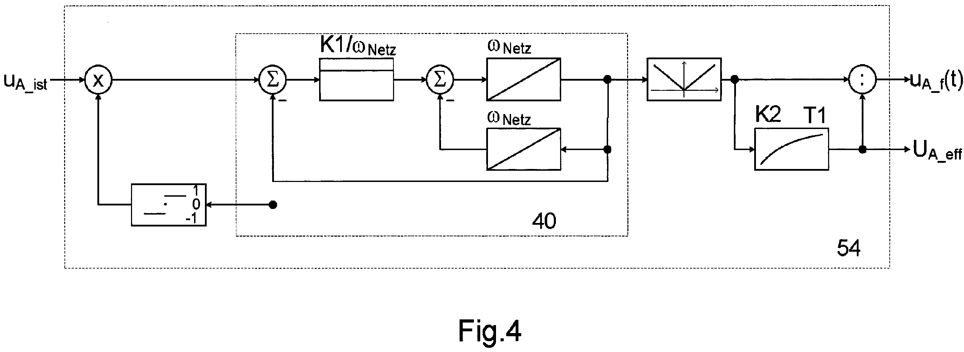

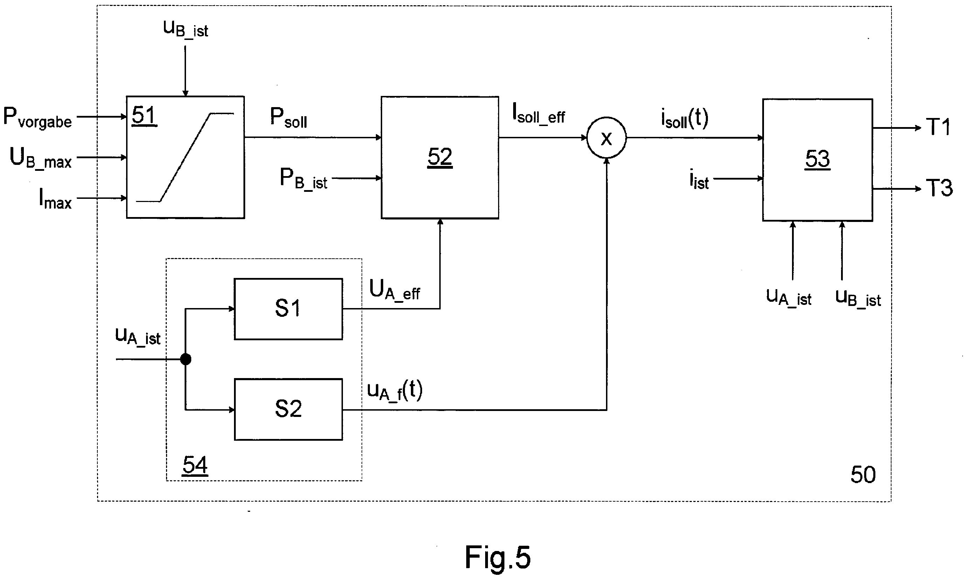

Figur 4 und 5 stellen die die Regelstruktur des DC/DC-Wandlers für den einphasigen Netzbetrieb dar.

Im Folgenden wird die zugehörige Regelstruktur beschrieben:
Die Ansteuerungseinheit 50 erzeugt die Steuersignale für die Transistoren T1 und T3 des DC/DC-Wandlers 3. Eingangsgrößen sind die Leistungsvorgabe P_vorgabe, die maximale Spannung U_B_max auf der dem Speicher 4 zugewandten Seite, also B-Seite, des DC/DC-Wandlers sowie der maximale Strom I_max des DC/DC-Wandlers 3.

Die Grenzleistungsbestimmungseinheit 51 bestimmt unter Berücksichtigung der Vorgabeleistung P_vorgabe, der Spannung U_B_max und des Stromes I_max sowie in Abhängigkeit der aktuellen Spannung u_B_ist den Leistungssollwert P_soll. Der Sollleistungswert P_soll wird im Leistungsregler 52 mit dem gemessenen Istwert P_B_ist der Leistung auf der B-Seite des DC/DC-Wandlers 3 verglichen

Die Leistung P_B_ist ist aus der Spannung u_B_ist und dem Strom i_ist unter Berücksichtigung der Einschaltzeit von T4 berechenbar und wird einem vorzugsweise als linearer Regler, wie PI-Regler, ausgeführten Regler 52 zugeführt sowie anschließend mit dem reziproken Effektivwert der A-seitigen Gleichspannung U_A_eff gewichtet. Auf diese Weise ist somit der Effektivwert I_Soll_eff des Sollstroms bestimmt.

Ausgangsgröße des den Regler 52 samt Gewichtungseinheit umfassenden Blocks ist der Sollwert I_soll_eff des Effektivstromes des DC/DC-Wandlers. Dieser wird mit der normierten und gefilterten Spannung u_A_f(t) multipliziert und dem Stromregler 53 als Sollgröße i_soll(t) vorgegeben. Dieser bestimmt unter Berücksichtigung des Iststromes i_ist und der Istspannungen u_A_ist, u_B_ist die Ansteuersignale der Transistoren T1 und T3.

Die Signale U_A_eff und u_A_f(t) werden in der Signalfilterungseinheit 54 ermittelt aus der Istspannung u_A_ist.

Eine mögliche detaillierte Ausführung der Signalfilterungseinheit 54 zeigt Figur 4.

Eingangsgröße hierbei ist die an der dem Gleichrichter 2 zugewandten Seite vorhandene Spannung u_A_ist, insbesondere A-seitige Spannung, des DC/DC-Wandlers 3. Diese wird einem auf die Netzkreisfrequenz ω = ω_netz abgestimmten Bandpass 40 zugeführt. Um ein bipolares Spannungssignal zu erhalten wird das Vorzeichen in Abhängigkeit der Ausgangsspannung des Bandpasses 40 verändert. Das Ausgangssignal des Bandpasses 40 wird wiederum gleichgerichtet und auf Basis seines Effektivwertes normiert.

Die vorgeschlagene Ansteuerung des DC/DC-Wandlers 3 erlaubt die Aufnahme eines annähernd sinusförmigen Netzstromes mit geringem Klirrfaktor und optimiertem Leistungsfaktor in allen Betriebszuständen, insbesondere auch bei Ausgangsspannungen U_B, die ober- und/oder unterhalb der Netzspannungsamplitude liegen.

Bei der Reglerstruktur wird also aus der A-seitig vorhandenen Spannung ein bandpassgefilterter Wert u_A_f(t), der normiert ist mit seinem Effektivwert U_A_eff, bestimmt. Somit ist auch noch der Effektivwert U_A_eff, also ein tiefpassgefilterter Wert, bestimmt.

Der Effektivwert U_A_eff wird zur Bestimmung des Effektivwerts I_Soll_eff verwendet. Durch Multiplikation mit dem bandpassgefilterter Wert und auf seinen Effektivwert normierten Signals u_A_f(t) wird der Sollstromwert bestimmt.

### Bezugszeichenliste

1 Spannungsquelle
2 Gleichrichter
3 DC/DC-Wandler
4 Energiespeicher, insbesondere Kondensator insbesondere eine Reihenschaltung von Doppelschichtkondensatoren
5 Hubwerksantrieb
6 Fahrwerksantrieb
40 Bandpass
50 Ansteuerungseinheit
51 Grenzleistungsbestimmungseinheit
52 Leistungsregler
54 Signalfilterungseinheit
C1 Kondensator
T1 steuerbarer Schalter
T2 steuerbarer Schalter
T3 steuerbarer Schalter
T4 steuerbarer Schalter
D1 Diode
D2 Diode
D3 Diode
D4 Diode
RL Last, insbesondere Hubwerkantrieb 5 und Fahrwerksantrieb 6
L Induktivität
I Strom durch die Induktivität L

## Patentansprüche

1. Vorrichtung,
mit einer netzseitigen Spannungsquelle (1),
mit einem Gleichrichter (2),
mit einem aus Kondensatoren gebildeten Energiespeicher (4),
mit mindestens einem Wechselrichter, und
mit einem DC/DC-Wandler (3),
wobei der Energiespeicher (4) und der Wechselrichter parallel mit dem DC/DC-Wandler (3) verbunden sind, und der DC/DC-Wandler (3) über den Gleichrichter (2) mit der netzseitigen Spannungsquelle (1) verbunden ist,
wobei der Gleichrichter (2) mit einer Sekundärwicklung verbunden ist, welche induktiv, mit einem stationär vorgesehenen und mit der Spannungsquelle verbundenen Primärleiter, gekoppelt ist,
wobei der DC/DC-Wandler (3) eine Ansteuerungseinheit (50) umfasst, wobei die Ansteuerungseinheit (50) einen Leistungsregler (52) umfasst, der einen ersten Solleffektivwert I_Soll_eff bestimmt,
**dadurch gekennzeichnet, dass**
die Ansteuerungseinheit (50) einen Stromregler umfasst, wobei dem Stromregler ein zweiter Sollwert i_soll(t) zuführbar ist, welcher durch Multiplikation eines Signals u_A_f(t) mit dem ersten Solleffektivwert I_Soll_eff bestimmt wird, wobei das Signal u_A_f(t) aus der an der dem Gleichrichter (2) zugewandten Seite des DC/DC-Wandlers (3) vorhandenen Spannung u_A(t) durch Bandpassfilterung und Normierung bestimmt wird.

2. Vorrichtung nach Anspruch 1,
**dadurch gekennzeichnet, dass**
der Gleichrichter (2) über eine Steckverbindung aus einer Spannungsquelle (1) versorgt ist, wobei die Steckverbindung ein Schuko-Steckverbinderteil aufweist und/oder die Spannungsquelle (1) zwischen 100 Volt und 300 Volt und zwischen 45 Hertz und 65 Hertz aufweist, insbesondere 230 Volt und 50 Hertz aufweist.

3. Vorrichtung nach mindestens einem der vorangegangenen Ansprüche,
**dadurch gekennzeichnet, dass**
der jeweilige Wechselrichter einen Elektromotor, insbesondere Drehstrommotor, speist, insbesondere so dass im generatorischen Betrieb mechanische Energie in elektrische Energie wandelbar ist.

4. Vorrichtung nach mindestens einem der vorangegangenen Ansprüche,
**dadurch gekennzeichnet, dass**
die generatorisch erzeugte überschüssige Energie dem Energiespeicher (4) zuführbar ist und dort speicherbar ist.

5. Vorrichtung nach mindestens einem der vorangegangenen Ansprüche,
**dadurch gekennzeichnet, dass**
der DC/DC-Wandler (3) als Stellglied für die von der netzseitigen Spannungsquelle (1) der Vorrichtung zugeführte Leistung fungiert.

6. Vorrichtung nach mindestens einem der vorangegangenen Ansprüche,
**dadurch gekennzeichnet, dass**
der DC/DC-Wandler (3) derart ausgeführt und eingerichtet ist, dass stets oder zumindest zeitweise die gleichgerichtete netzseitige Spannung kleiner ist als die an der Ausgangsseite auftretende Spannung oder dieser gleicht.

7. Vorrichtung nach mindestens einem der vorangegangenen Ansprüche,
**dadurch gekennzeichnet, dass**
der DC/DC-Wandler (3) eine Induktivität aufweist, welche mit einem ersten steuerbaren Schalter in Reihe geschaltet ist, wobei der Ausgangsstrom des Gleichrichters dieser Reihenschaltung zugeführt wird,
insbesondere wobei ein weiterer steuerbarer Schalter auf der von dem ersten steuerbaren Schalter abgewandten Seite der Induktivität angeordnet ist,
wobei aus dem ersten steuerbaren Schalter und einer ersten Diode eine erste Reihenschaltung gebildet ist, die von der eingangsseitig den DC/DC-Wandler (3) speisenden Spannung gespeist wird,
wobei aus dem zweiten steuerbaren Schalter und einer zweiten Diode eine zweite Reihenschaltung gebildet ist, wobei die ausgangsseitige Spannung des DC/DC-Wandlers (3) vorgesehen ist.

8. Vorrichtung nach mindestens einem der vorangegangenen Ansprüche,
**dadurch gekennzeichnet, dass**
der DC/DC-Wandler (3) eingangsseitig und ausgangsseitig jeweils eine Reihenschaltung aus zwei steuerbaren Schaltern aufweist, wobei die Mittelabgriffe der Reihenschaltungen mittels einer Induktivität verbunden sind.

9. Vorrichtung nach mindestens einem der vorangegangenen Ansprüche,
**dadurch gekennzeichnet, dass**
der die Induktivität durchströmende Strom erfassbar ist und die erfassten Werte einer Signalelektronik zugeleitet werden, welche Ansteuersignale erzeugt, die dem jeweiligen steuerbaren Schalter zugleitet werden,
insbesondere so, dass die ausgangsseitig am DC/DC-Wandler (3) erzeugte Ausgangsspannung den eingangsseitig am DC/DC-Wandler (3) anliegenden Spannungswert übersteigt,
wobei die eingangsseitig am DC/DC-Wandler (3) anliegende Spannung von einem Gleichrichter (2) erzeugt ist.

10. Vorrichtung nach mindestens einem der vorangegangenen Ansprüche,
**dadurch gekennzeichnet, dass**
der Energiespeicher (4) derart auf dem bewegbaren Teil einer Maschinenachse angeordnet ist, dass der bei Bewegung der Maschinenachse entstehende Fahrtwind den Energiespeicher (4) kühlt,
insbesondere wobei das Gehäuse des Energiespeichers (4) in hoher Schutzart ausgeführt ist, insbesondere wasserdicht und luftdicht.

11. Vorrichtung nach mindestens einem der vorangegangenen Ansprüche,
**dadurch gekennzeichnet, dass**
der Energiespeicher (4) derart groß dimensioniert ist, dass derjenige Anteil der in der Vorrichtung maximal vorhandenen mechanischen Energie, insbesondere der kinetischen und potentiellen Energie, welcher elektrisch rückwandelbar ist, in den Energiespeicher (4) einspeisbar ist.

12. Verfahren zum Betreiben einer Vorrichtung,
wobei das Verfahren die folgenden Schritte umfasst:
- Elektrische Versorgung eines Gleichrichters (2) aus einer Spannungsquelle, welche über einen induktiv gekoppelten Primärleiter und eine Sekundärwicklung den Gleichrichter (2) versorgt,
- Parallele elektrische Versorgung eines Energiespeichers (4) und Wechselrichters durch einen DC/DC-Wandler (3), wobei der DC/DC-Wandler (3) von dem Gleichrichter (2) versorgt wird,
- Bestimmen eines ersten Solleffektivwertes I_Soll_eff durch einen Leistungsregler (52) der in dem DC/DC-Wandler (3) angeordnet ist,
wobei aus der Spannung u_A(t) an der dem Gleichrichter (2) zugewandten Seite des DC/DC-Wandlers (3) durch Bandpassfilterung und Normierung ein Signal u_A_f(t) erzeugt wird,
- Zuführen eines zweiten Sollwertes i_soll(t) zu einem Stromregler, welcher durch Multiplikation des Signals u_A_f(t) mit dem ersten Solleffektivwert I_Soll_eff bestimmt wird.

## Claims

1. Device
comprising a grid-side voltage source (1),
comprising a rectifier (2),
comprising an energy storage unit (4) formed of capacitors,
comprising at least one inverter, and
comprising a DC-to-DC converter (3),
the energy storage unit (4) and the inverter being connected in parallel with the DC-to-DC converter (3), and the DC-to-DC converter (3) being connected to the grid-side voltage source (1) by means of the rectifier (2),
the rectifier (2) being connected to a secondary winding which is inductively coupled to a primary conductor, which is provided in a stationary manner and is connected to the voltage source,
the DC-to-DC converter (3) comprising an actuation unit (50), the actuation unit (50) comprising a power regulator (52), which determines a first target effective value I_targ_eff, **characterised in that**
the actuation unit (50) comprises a current regulator, a second target value i_targ(t) being able to be fed to the current regulator and being determined by multiplying a signal u_A_f(t) by the first target effective value I_targ_eff, the signal u_A_f(t) being determined, by means of band-pass filtering and normalisation, from the voltage u_A(t) present at the side of the DC-to-DC converter (3) facing the rectifier (2).

2. Device according to claim 1,
**characterised in that**
the rectifier (2) is supplied with power from a voltage source (1) by means of a plug-in connection, the plug-in connection having a Schuko plug-in connector part and/or the voltage source (1) having between 100 volts and 300 volts and between 45 hertz and 65 hertz, in particular 230 volts and 50 hertz.

3. Device according to at least one of the preceding claims,
**characterised in that**
each inverter powers an electric motor, in particular a three-phase motor, in particular such that mechanical energy can be converted into electrical energy in generation mode.

4. Device according to at least one of the preceding claims,
**characterised in that**
the excess energy generated in generation mode can be fed to and stored in the energy storage unit (4).

5. Device according to at least one of the preceding claims,
**characterised in that**
the DC-to-DC converter (3) acts as an actuator for the power fed by the grid-side voltage source (1) of the device.

6. Device according to at least one of the preceding claims,
**characterised in that**
the DC-to-DC converter (3) is configured and set up such that the rectified grid-side voltage is always or at least at times lower than or equal to the voltage occurring at the output side.

7. Device according to at least one of the preceding claims,
**characterised in that**
the DC-to-DC converter (3) has an inductor wired in series with a first controllable switch, the output current of the rectifier being fed to this series circuit,
a further controllable switch in particular being arranged on the side of the inductor facing away from the first controllable switch,
a first series circuit being formed from the first controllable switch and a first diode and being powered by the voltage that powers the DC-to-DC converter (3) at the input,
a second series circuit being formed from the second controllable switch and a second diode, wherein the output-side voltage of the DC-to-DC converter (3) is provided.

8. Device according to at least one of the preceding claims,
**characterised in that**
at both the input and output, the DC-to-DC converter (3) has a series circuit of two controllable switches, the mid-taps of the series circuits being connected by means of an inductor.

9. Device according to at least one of the preceding claims,
**characterised in that**
the current passing through the inductor can be detected and the detected values are forwarded to a signal electronics, which generates actuation signals, which are forwarded to the relevant controllable switches,
in particular such that the output voltage generated at the output of the DC-to-DC converter (3) is greater than the voltage value applied at the input of the DC-to-DC converter (3),
the voltage applied at the input of the DC-to-DC converter (3) being generated by a rectifier (2).

10. Device according to at least one of the preceding claims,
**characterised in that**
the energy storage unit (4) is arranged on the movable part of a machine axle in such a way that the wind blast occurring when the machine axle is in motion cools the energy storage unit (4),
the housing of the energy storage unit (4) in particular being configured with a high protection class, in particular in a watertight and airtight manner.

11. Device according to at least one of the preceding claims,
**characterised in that**
the energy storage unit (4) is dimensioned to be so large that the electrically reconvertible portion of the maximum mechanical energy present in the device, in particular the kinetic and potential energy, can be fed into the energy storage unit (4).

12. Method for operating a device,
wherein the method comprises the following steps:
- supplying a rectifier (2) with electrical power from a voltage source, which supplies the rectifier (2) with power by means of an inductively coupled primary conductor and a secondary winding,
- supplying an energy storage unit (4) and an inverter with electrical power in parallel by means of a DC-to-DC converter (3), wherein the DC-to-DC converter (3) is supplied with power by the rectifier (2),
- determining a first target effective value I_targ_eff by means of a power regulator (52) arranged in the DC-to-DC converter (3), wherein, by means of band-pass filtering and normalisation, a signal u_A_f(t) is generated from the voltage u_A(t) at the side of the DC-to-DC converter (3) facing the rectifier (2),
- feeding a second target value i_targ(t) to a current regulator, said second target value being determined by multiplying the signal u_A_f(t) by the first target effective value I_targ_eff.

## Revendications

1. Dispositif comprenant
une source de tension (1) située côté réseau,
un redresseur (2),
un accumulateur d'énergie (4) formé par des condensateurs,
au moins un onduleur, et
un convertisseur (3) CC/CC,
ledit accumulateur d'énergie (4) et ledit onduleur étant connectés en parallèle avec ledit convertisseur (3) CC/CC, lequel convertisseur (3) CC/CC est connecté à ladite source de tension (1) située côté réseau, par l'intermédiaire dudit redresseur (2),
lequel redresseur (2) est connecté à un enroulement secondaire couplé, par induction, à un conducteur primaire qui est prévu avec disposition stationnaire et est connecté à ladite source de tension,
ledit convertisseur (3) CC/CC incluant une unité de pilotage (50), laquelle unité de pilotage (50) inclut un régulateur de puissance (52) qui détermine une première valeur de consigne effective I_Soll_eff,
**caractérisé par le fait que**
l'unité de pilotage (50) inclut un régulateur de courant, sachant qu'une seconde valeur de consigne isoll(t), déterminée en multipliant un signal u_A_f(t) par la première valeur de consigne effective I_Soll_eff, peut être délivrée audit régulateur de courant, ledit signal u_A_f(t) étant déterminé, par filtrage passe-bande et par normalisation, à partir de la tension u_A(t) présente du côté du convertisseur (3) CC/CC qui pointe vers le redresseur (2).

2. Dispositif selon la revendication 1,
**caractérisé par le fait que**
le redresseur (2) est alimenté à partir d'une source de tension (1), par l'intermédiaire d'une connexion enfichable,
sachant que ladite connexion enfichable comporte une partie de connecteur enfichable Schuko et/ou que ladite source de tension (1) présente des valeurs comprises entre 100 volts et 300 volts, et entre 45 hertz et 65 hertz, en particulier 230 volts et 50 hertz.

3. Dispositif selon au moins l'une des revendications précédentes,
**caractérisé par le fait que**
l'onduleur respectif alimente un moteur électrique, notamment un moteur à courant triphasé, en particulier de façon telle que de l'énergie mécanique puisse être convertie en de l'énergie électrique lors du fonctionnement en mode générateur.

4. Dispositif selon au moins l'une des revendications précédentes,
**caractérisé par le fait que**
l'énergie excédentaire engendrée en mode générateur peut être délivrée à l'accumulateur d'énergie (4), et peut être stockée dans ce dernier.

5. Dispositif selon au moins l'une des revendications précédentes,
**caractérisé par le fait que**
le convertisseur (3) CC/CC remplit la fonction d'un organe de réglage affecté à la puissance délivrée par la source de tension (1) dudit dispositif, située côté réseau.

6. Dispositif selon au moins l'une des revendications précédentes,
**caractérisé par le fait que**
le convertisseur (3) CC/CC est conçu et agencé de telle sorte que la tension redressée côté réseau soit, en permanence ou au moins temporairement, inférieure ou égale à la tension se présentant du côté sortie.

7. Dispositif selon au moins l'une des revendications précédentes,
**caractérisé par le fait que**
le convertisseur (3) CC/CC présente une inductance branchée en série avec un premier interrupteur commandable, le courant de sortie du redresseur étant délivré à ce branchement en série,
sachant notamment qu'un interrupteur commandable supplémentaire est implanté du côté de ladite inductance qui pointe à l'opposé dudit premier interrupteur commandable, sachant qu'un premier branchement en série, constitué à partir dudit premier interrupteur commandable et d'une première diode, est alimenté par la tension alimentant le convertisseur (3) CC/CC côté entrée,
sachant qu'un second branchement en série, sur lequel est prévue la tension située côté sortie dudit convertisseur (3) CC/CC, est constitué à partir du second interrupteur commandable et d'une seconde diode.

8. Dispositif selon au moins l'une des revendications précédentes,
**caractérisé par le fait que**
le convertisseur (3) CC/CC est muni, côté entrée et côté sortie, d'un branchement respectif en série constitué à partir de deux interrupteurs commandables, les prises centrales des branchements en série étant connectées au moyen d'une inductance.

9. Dispositif selon au moins l'une des revendications précédentes,
**caractérisé par le fait que**
le courant circulant par l'inductance peut être détecté, et les valeurs détectées sont dirigées vers une électronique de signaux engendrant des signaux de pilotage qui sont dirigés vers l'interrupteur commandable considéré,
notamment de façon telle que la tension de sortie, engendrée sur le convertisseur (3) CC/CC côté sortie, excède la valeur de la tension appliquée audit convertisseur (3) CC/CC côté entrée,
ladite tension, appliquée audit convertisseur (3) CC/CC côté entrée, étant engendrée par un redresseur (2).

10. Dispositif selon au moins l'une des revendications précédentes,
**caractérisé par le fait que**
l'accumulateur d'énergie (4) est implanté, sur la partie mobile d'un axe de machine, de telle manière que le vent relatif, engendré au cours d'un mouvement dudit axe de machine, refroidisse ledit accumulateur d'énergie (4),
sachant notamment que le carter dudit accumulateur d'énergie (4) présente une réalisation à mode de protection élevée, en particulier avec étanchéité à l'eau et avec étanchéité à l'air.

11. Dispositif selon au moins l'une des revendications précédentes,
**caractérisé par le fait que**
l'accumulateur d'énergie (4) possède un grand dimensionnement tel que la part constitutive de l'énergie mécanique qui est présente au maximum dans ledit dispositif, notamment des énergies cinétique et potentielle, et qui peut être reconvertie en électricité, puisse être injectée dans ledit accumulateur d'énergie (4).

12. Procédé conçu pour faire fonctionner un dispositif,
ledit procédé incluant les étapes suivantes :
- alimentation électrique d'un redresseur (2) à partir d'une source de tension qui alimente ledit redresseur (2) par l'intermédiaire d'un conducteur primaire couplé par induction, et d'un enroulement secondaire,
- alimentation électrique en parallèle, par l'intermédiaire d'un convertisseur (3) CC/CC, d'un accumulateur d'énergie (4) et d'un onduleur, ledit convertisseur (3) CC/CC étant alimenté par ledit redresseur (2),
- détermination d'une première valeur de consigne effective I_Soll_eff par l'intermédiaire d'un régulateur de puissance (52) intégré dans ledit convertisseur (3) CC/CC, un signal u_A_f(t) étant engendré, par filtrage passe-bande et par normalisation, à partir de la tension u_A(t) présente du côté dudit convertisseur (3) CC/CC qui pointe vers ledit redresseur (2),
- délivrance, à un régulateur de courant, d'une seconde valeur de consigne i_soll(t) déterminée en multipliant ledit signal u_A_f(t) par ladite première valeur de consigne effective I_Soll_eff.
